# EUROPÄISCHE PATENTSCHRIFT

(11) **EP 2 483 496 B1**
(45) Veröffentlichungstag und Bekanntmachung des Hinweises auf die Patenterteilung: **12.07.2017**
(21) Anmeldenummer: 10779208.7
(22) Anmeldetag: 15.09.2010
(51) Int. Cl.: E04F 13/08, E04F 15/02, E04F 15/024, F16B 5/00

(54) **BELAG AUS MECHANISCH MITEINANDER VERBINDBAREN ELEMENTEN**
COVERING COMPRISING ELEMENTS THAT CAN BE CONNECTED TO EACH OTHER MECHANICALLY
REVÊTEMENT CONSTITUÉ D'ÉLÉMENTS POUVANT ÊTRE RELIÉS MÉCANIQUEMENT LES UNS AUX AUTRES

(30) Priorität: 02.10.2009 DE 102009048050
(43) Veröffentlichungstag der Anmeldung: 08.08.2012
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/DE2010/001089
(87) Internationale Veröffentlichungsnummer: WO 2011/038709

(56) Entgegenhaltungen:
- EP-A1- 2 034 106
- EP-A2- 1 350 904
- WO-A1-2004/003314
- WO-A1-2010/142671
- WO-A2-2009/066153
- DE-U1-202007 017 602
- DE-U1-202007 018 662

## Beschreibung

Die Erfindung betrifft einen Belag aus mechanisch miteinander verbindbaren Elementen.

Wand-, Decken- und Bodenbeläge, wie z.B. Fertigparkett, Holzböden oder Laminatfußböden, bestehen aus mehreren Reihen von in ihrer Konfiguration vorliegend rechteckigen Paneelen. Konventionell besitzen die Paneele auf einer Längsseite und auf einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Paneele verlegt, wobei die Paneele zweier benachbarter Reihen versetzt zueinander angeordnet werden.

Es ist bekannt, an den Nuten und Federn mechanische Verriegelungsmittel auszubilden, welche bei in einem Fußbodenbelag benachbarten Paneelen miteinander in rastenden Eingriff gelangen. Hierdurch soll eine Fugenbildung im verlegten Fußbodenbelag durch Dehnungs- oder Schrumpfungsvorgänge vermieden werden. An die Nut und Feder der Paneele sind aneinander angepasste Verriegelungselemente in Form von Vertiefungen, Ausnehmungen oder Vorsprüngen ausgebildet, um verbundene Fußbodenpaneele in der zusammengefügten Lage leimlos zu halten. In der Regel werden die Paneele entlang ihrer Längsseiten ineinander gedreht oder geklickt und anschließend seitlich verschoben, so dass Verriegelungsleisten an den Kopfseiten in Eingriff gelangen. Um dieses zu erleichtern, können von der gegenüberliegenden Kopfseite her leichte Hammerschläge unter Zuhilfenahme eines Schlagklotzes angewandt werden. Hierbei besteht die Gefahr, dass es selbst bei sorgfältigstem Arbeiten zu Schäden an den Fußbodenpaneelen kommen kann.

Es gibt auch Lösungen, bei denen die aneinander stoßenden Kopfseiten nicht durch Hammerschläge miteinander verriegelt werden müssen, sondern durch verschiebbare Federelemente. Ein Beispiel hierfür ist der in der DE 20 2007 018 662 U1 beschriebene Bodenbelag, bei welchem identisch ausgebildete Paneele durch eine im Wesentlichen vertikale Fügebewegung in horizontaler und vertikaler Richtung miteinander verriegelt werden können, wobei die Verriegelung in vertikaler Richtung durch zumindest ein in horizontaler Richtung bewegbares, einstückig aus dem Kern an einer Seitenkante herausgebildetes Federelement bewirkbar ist, das bei der Fügebewegung hinter eine sich im Wesentlichen in horizontale Richtung erstreckende Verriegelungskante einschnappt. Das mindestens eine Federelement ist in Richtung der Oberseite und in Richtung der gegenüberliegenden Seitenkante gegenüber dem Kern frei und in seiner Seitenkante an mindestens einem der beiden Enden mit dem Kern verbunden. Es wird als nachteilig angesehen, dass das Federelement zum Verriegeln zunächst mit einer horizontal wirkenden Kraft beaufschlagt werden muss, um das Federelement zurückzudrücken, bevor sich die aufgebaute Federspannung entlädt und das Federelement hinter die Verriegelungsleiste schnappt. Ähnlich verhält es sich bei den in der EP 1 350 904 A2 beschriebenen Fußbodendielen, bei welchen die Feder, die an einer Stirnseite eines Fußbodenelements angebracht werden muss, zunächst zurückgedrückt werden muss, bevor sie in eine zur Verriegelung vorgegebene Aufnahme einschnappen kann. In jedem Fall muss ein hinreichend großer Freiraum hinter der Feder vorhanden sein, damit die Feder vor dem Einschnappen zurückgedrückt werden kann.

Aus der EP 2 034 106 A1 ist ein Belag mit mechanisch verbindbaren Elementen in Form von Bodenpaneelen bekannt, die an ihren gegenüberliegenden Seiten eine korrespondierende Profilierung besitzen und über diese verriegelbar sind. Die Verriegelung wird durch ein elastisches Federelement bewirkt, welches an einem der Elemente durch eine formschlüssige Verbindung angelenkt ist und hinter eine sich in horizontale Richtung erstreckende Verriegelungskante des benachbarten Paneels verschwenkbar ist. Das Federelement wird in der Ausgangsstellung über einen Haftkleber als Sollbruchstelle mit dem Element verbunden. Die Sollbruchstelle versagt beim Verschwenken des Federelements. Die Herstellung einer formschlüssigen Verbindung zur Definition des Drehpunktes des Federelements ist relativ aufwändig.

Zum Stand der Technik ist ferner die WO2004/003314 A1 zu nennen, die ein Fußbodensystem mit Paneelen betrifft, welche an ihren Seitenkanten miteinander verriegelbar sind. Die Verriegelung sieht ein einstückig an dem einen Paneel angeordnetes, vertikales Federelement vor, das auf seiner dem anderen Paneel abgewandten Seite eine Elastizitätsnut besitzt, die mit einem elastischen Mittel, wie z. B einem PVC-Kleber gefüllt ist. Das Federelement kann während der Verriegelung seitlich ausgelenkt werden und bleibt auch nach dem Verriegeln fest mit dem Paneel verbunden. Falls das Federelement abbrechen sollte, müsste es von dem elastischen Mittel in Position gehalten werden. Allerdings würde sich auf Grund der vertikalen Orientierung des Federelements zwangsläufig ein Höhenversatz zwischen den Paneelen einstellen. Der Erfindung liegt die Aufgabe zu Grunde, einen Belag aus mechanisch miteinander verbindbaren Elementen aufzuzeigen, welcher sich mit geringem Kraftaufwand sicher verriegeln lässt und welcher einfach herstellbar ist.

Der gegenständliche Teil dieser Aufgabe ist bei einem Belag mit den Merkmalen des Patentanspruchs 1 gelöst.

Die Unteransprüche betreffen vorteilhafte Weiterbildungen der Erfindung.

Der erfindungsgemäße Belag umfasst mechanisch miteinander verbindbare Elemente, wobei mindestens eines der Elemente ein Paneel ist. Die Erfindung beinhaltet die Möglichkeit, dass eines der Elemente als Paneel und das weitere Element als Rahmenbauteil für eine Rahmenkonstruktion beispielsweise für Doppelböden ausgeführt ist. Die nachfolgende Beschreibung der Erfindung bezieht sich auf eine Ausführung, bei welcher die zu verbindenden Elemente Paneele sind.

Die Elemente besitzen an ihren gegenüberliegenden Seiten eine zueinander korrespondierende Profilierung, mittels welcher benachbarte Elemente durch eine im Wesentlichen vertikale oder schwenkende Fügebewegung in horizontaler Richtung und vertikaler Richtung miteinander verriegelbar sind. Bei den erfindungsgemäßen Elementen ist es möglich, das anzulegende Element abzuschwenken oder abzuklappen. Ebenso ist es möglich, die Elemente durch eine im Wesentlichen oder auch ausschließlich vertikale Bewegung miteinander zu verriegeln. Die gegenüberliegenden, mit einer korrespondierenden Profilierung im Sinne der vorliegenden Erfindung versehenen Seiten sind insbesondere Kopfseiten der Elemente. Die Profilierung kann prinzipiell an allen Seiten, also den Kopfseiten und den Längsseiten, der im Wesentlichen rechteckigen Elemente vorgesehen sein.

Bei der Erfindung ist vorgesehen, dass die Verriegelung durch zumindest ein Federelement bewirkbar ist, das an einem der Elemente zum einen bereichsweise über einen elastischen Werkstoff mit einem Kern des Elements verbunden ist und zum anderen vor der Fügebewegung einstückiger Bestandteil des Elements ist. Der elastische Werkstoff ist in einen zwischen einer zum Kern des Elements gewandten Rückseite des Federelements und dem Kern angeordneten Freiraum eingebracht. Das derart angelenkte Federelement ist bei der Fügebewegung hinter eine sich im Wesentlichen in horizontaler Richtung erstreckende Verriegelungskante des benachbarten Elements verschwenkbar.

Dadurch, dass sich die Verriegelungskante im Wesentlichen in horizontaler Richtung erstreckt, werden die beiden Elemente gegen Verlagerung in vertikaler Richtung, d.h. senkrecht zur Verlegeebene, gesichert. An den Elementen können zusätzliche Verriegelungsleisten vorgesehen sein, um zusätzlich zu der Verriegelung in vertikaler Richtung auch die Verriegelungen der Verlegeebene zu bewirken.

Die einstückige Verbindung zwischen dem Federelement und dem Element ist als Sollbruchstelle konfiguriert, welche dafür vorgesehen ist, beim Verschwenken des Federelements zu versagen, insbesondere zu brechen. Beim Verschwenken bzw. Absenken des Federelements wird also durch die Sollbruchstelle bevorzugt ein gezielter Bruch zwischen dem Federelement und dem Kern des Elements bewirkt. Das Versagen bzw. der Bruch der Sollbruchstelle zwischen Federelement und Kern erfolgt vorzugsweise beim erstmaligen Verbinden zweier benachbarter Elemente.

Die Sollbruchstelle ist so konfiguriert, dass bei Überschreiten einer bestimmten Belastung ein Versagen der Struktur genau an dieser Stelle erfolgt um die gewünschte Funktion, nämlich die Verlagerung des Federelements zu erreichen. Bei dem Versagen handelt es sich insbesondere um einen Sprödbruch. Das Versagen kann aber auch in einer Überdehnung des Kernmaterials, d. h. in einer bleibenden plastischen Verformung bestehen. Die Bruchmechanik ist abhängig von den Materialeigenschaften des Federelements, wobei das plastische Verformungsverhalten unter anderem vom Spannungszustand, der Temperatur, der Belastungsart und der Belastungsgeschwindigkeit abhängt. Nachfolgend wird zur Vereinfachung der Begriff brechen / Bruch für das Versagen der Sollbruchstelle verwendet und zwar unabhängig davon, ob es sich um eine plastische Verformung, um einen Teilbruch oder um einen kompletten Sprödbruch handelt.

Beim Fügen der benachbarten Elemente gleitet das Federelement mit seiner Unterseite auf einer der Verriegelungskante gegenüberliegenden Stützfläche des benachbarten Elements. Hierbei ist das Federelement auf Grund einer materialspezifischen Elastizität des Elements, welche eine gewisse Verschwenkung des Federelements gegenüber seiner Ausgangsposition ermöglicht, ohne dass das Material plastisch verformt wird, also nachgibt oder bricht, noch einstückiger Bestandteil des Elements. Beim weiteren Absenken des Elements wird das Federelement weiter gegenüber seiner Ausgangsstellung verschwenkt. Das Federelement bricht im Bereich der Sollbruchstelle quasi vom Kern ab, bleibt aber gleichzeitig über den elastischen Werkstoff mit dem Kern des Elements verbunden. Optimalerweise erfolgt das Versagen der Sollbruchstelle, d. h. insbesondere der Bruch, sobald das Federelement in die horizontale Position zwischen einer Stützfläche und einer Unterseite der Verriegelungskante einrastet oder kurz vorher, d.h. relativ spät während des Fügens. Tritt ein Bruch vor dem Erreichen der Verriegelungsposition ein, fungiert die Bruchkante auf Seiten des Kerns als Widerlager, drückt auf die federelementseitige Bruchkante und bewirkt so, dass das Federelement die Verriegelungsposition erreicht. Dabei hält der elastische Werkstoff das Federelement so in Position, dass sich die Bruchkanten im Wesentlichen gegenüberstehen.

Zusätzlich kann an der Sollbruchstelle eine Sollbruchkerbe vorgesehen sein zur gezielten Einleitung von Kerbspannungen und somit zur gezielten Positionierung der Bruchstelle. Gleichzeitig kann so auch der Verlauf der Bruchkanten zumindest teilweise beeinflusst werden. Zudem kann mit der Sollbruchkerbe der Zeitpunkt des Bruches, also wie weit das Federelement elastisch aus seiner Ausgangsposition heraus verschwenkt werden kann, bevor es zum Bruch kommt, festgelegt werden. Darüber hinaus kann beim Bruch frei werdendes Material von der Sollbruchkerbe aufgenommen werden.

Ist keine Sollbruchkerbe vorgesehen, kann in einer vorteilhaften Ausgestaltung oberhalb der Sollbruchstelle, d.h. zur Oberseite des Elements hin, auch ein Freischnitt angeordnet sein. Dieser Freischnitt kann der Aufnahme beim Bruch zwischen Federelement und Kern eventuell entstehenden Materials dienen. Sowohl die Sollbruchkerbe als auch der Freischnitt oberhalb der Sollbruchstelle können gleichzeitig mit der Kontur des Federelements aus dem Kern geschnitten werden, ohne den Herstellungsaufwand nennenswert zu erhöhen.

Die Stützfläche, mit welcher das Federelement korrespondiert, ist im Wesentlichen horizontal ausgerichtet und liegt der Verriegelungskante gegenüber. In einer vorteilhaften Ausgestaltung ist eine Unterseite der Verriegelungskante zur Stützfläche parallel. Die beim Fügen benachbarter Elemente auf der Stützfläche gleitende Unterseite des Federelements ist vorzugsweise konvex ausgestaltet. Dadurch steht das Federelement während des gesamten Fügens in Kontakt mit der Stützfläche und wird so durch die Stützfläche geführt. In vorteilhafter Weise ist eine Oberseite des Federelements vor der Fügebewegung schräg, d.h. von der Sollbruchstelle zur Stirnseite und Unterseite des Elements hin abfallend, ausgebildet. Bei der Herstellung der Elemente wird die schräg stehende Oberseite aus dem Kern freigeschnitten, nachdem der elastische Werkstoff in den rückseitigen Freiraum des Federelements eingebracht wurde.

Nach dem Fügen liegt das Federelement in der Verriegelungsposition mit seiner Oberseite an einer Unterseite der Verriegelungskante in einer im Wesentlichen horizontalen Ausrichtung an.

Vorzugsweise handelt es sich bei dem elastischen Werkstoff um einen Klebstoff, ein Elastomer, einen Reaktivklebstoff, einen Hot-Melt oder eine dauerelastische Dicht- oder Fugenmasse. Mit Reaktivklebstoff werden Klebstoffe bezeichnet, welche über chemische Reaktionen aushärten und abbinden. Zu diesen Dicht- oder Fugenmassen zählen auch Acrylate und Silicone. Die Auswahl des elastischen Werkstoffes erfolgt natürlich in Abhängigkeit der für die Elemente eingesetzen Werkstoffe, um eine gute Haftung zwischen dem elastischen Werkstoff und dem Element zu erhalten. Das erfindungsgemäß ausgestaltete Federelement muss zur Verriegelung zunächst keine Federkraft überwinden in dem Sinne, dass das Federelement von der benachbarten Seite des Elements zurückgedrückt wird. Es wird vielmehr ausschließlich in Richtung des benachbarten Elements verlagert. Das Federelement schnappt also nicht unter dem Einfluss einer Federkraft hinter die Verriegelungskante, sondern wird zwangsgeführt hinter die Verriegelungskante gedrängt. Das hat den Vorteil, dass kein übergroßer Freiraum auf der dem Kern des Elements zugewandten Rückseite des Federelements erforderlich ist, da das Federelement bei der Verriegelung nur in eine Richtung verlagert wird und durch die Verriegelungskante nicht in Richtung des Freiraums gedrückt wird. Die Verlagerung des Federelements erfolgt also ausschließlich in Richtung des benachbarten Elements.

Nach dem Versagen, insbesondere dem Bruch der Sollbruchstelle ist das Federelement nur noch über den elastischen Werkstoff mit dem Kern verbunden. Die elastische Verbindung zwischen Federelement und Kern ist so konfiguriert, dass sie auch nach dem Fügen bestehen bleibt. Diese Verbindung ermöglicht gegebenenfalls trotz Bruchs ein nochmaliges Verlegen der Elemente. Darüber hinaus kann sich das Federelement nicht selbsttätig über die Rückstellkräfte des elastischen Werkstoffs wieder zurückbewegen, da es zwischen der Stützfläche und der Unterseite der Verriegelungskante gehalten wird. Vorzugsweise befindet sich das Federelement in einem Zustand der Selbsthemmung und kann nicht ohne eine fremde Kraft zurück in seine Ausgangsposition gelangen, so dass die Elemente sicher in der Verriegelungsposition, d.h. in der Verlegeebene, gehalten sind. Zusätzlich kann bevorzugt an einer Unterseite der Verriegelungskante und/oder einer Oberseite des Federelements eine die Reibung erhöhende Profilierung vorhanden sein.

Es ist zwar theoretisch möglich, bei einem rein vertikalen Ablegen eines Elements nur ein einziges verschwenkbares, leistenartiges Federelement vorzusehen, es wird jedoch als zweckmäßig erachtet, wenn an einer Seite eines Elements mehrere unabhängig voneinander verschwenkbare Federelemente angeordnet sind. In diesem Fall ist nämlich nicht nur das im Wesentlichen vertikale Ablegen des Elements möglich, sondern auch das klemmungsfreie Abwinkeln oder Abklappen der Elemente, bei welchen beispielsweise im Kopfseitenbereich die Kopfseiten zunächst mit einer Ecke miteinander in Eingriff gelangen und dann durch weiteres Abklappen des anzulegenden Elements letztlich beide Kopfseiten parallel zueinander verlaufen und vollständig miteinander in Eingriff stehen.

Da es bei einem einzigen langen Federelement zu einer ungleichmäßigen Belastung während des Abklappens kommen würde und damit zu Spannungen innerhalb des Federelements, ist es zweckmäßig, mehrere einzelne Federelemente vorzusehen, die zeitlich zueinander versetzt betätigt werden. Dabei können die Federelemente aneinander angrenzend oder voneinander beabstandet angeordnet sein. Vorteilhafterweise ist mehr als ein Federelement pro Seite angeordnet.

Es ist auch denkbar, Federelemente unterschiedlicher Elastizitäten an einer Seite anzuordnen, wodurch ein gestufter Einrastvorgang ermöglicht wird. Die Federelemente können daher auch durchaus im Abstand zueinander angeordnet sein. Fertigungstechnisch ist es am einfachsten, wenn zunächst ein einziges entsprechend langes Federelement in einzelne Abschnitte unterteilt wird. Hierzu können mehrere Schlitze in dem ursprünglich einzigen Federelement ausgebildet werden, damit die so vereinzelten Federelemente beim Abklappen der Reihe nach betätigt werden können.

Es besteht die Möglichkeit, einander benachbarte Federelemente zueinander relativ beweglich miteinander zu verbinden. Als Verbindungsmittel kann ein elastisches Bauelement dienen, wie z.B. ein elastischer Klebstoff, wie er auch in dem rückwärtigen Freiraum des Federelements zum Einsatz kommt. Die elastische Verbindung ermöglicht es, die Federelemente kleiner zu gestalten, ohne dass die Gefahr besteht, dass sich ein einzelnes Federelement von dem Element bei Beschädigung löst. Der Gestaltungsspielraum ist grundsätzlich größer, wenn die Federelemente zusätzlich klebetechnisch miteinander verbunden sind.

In vorteilhafter Weiterbildung weist das die Verriegelungskante aufweisende Element eine unter das das Federelement tragende Element greifende Verriegelungsleiste auf. Diese Verriegelungsleiste ist dafür geeignet und vorgesehen, die benachbarten Elemente gegen Zugbelastungen in einer Verlegeebene zu sichern. Durch die zusätzliche Verriegelungsleiste werden ausschließlich horizontale Zugkräfte aufgenommen, also Zugbelastungen in der Verlegeebene. Dadurch wird sichergestellt, dass an der Oberseite kein Fügespalt verbleibt. Das Eintreten von Flüssigkeit und Verschmutzungen in etwaige Spalten wird verhindert.

Die Verriegelungsleiste kann insbesondere bei Wandbelägen auch dazu dienen, an einer Unterkonstruktion, insbesondere einer wandseitigen Unterkonstruktion, befestigt zu werden. Zum Beispiel kann die Verriegelungsleiste durch ein Befestigungsmittel in Form eines Clips an der Unterkonstruktion befestigt werden. Denkbar ist auch, die Verriegelungsleiste unmittelbar anzuschrauben, anzunageln oder anzuheften, d.h. ohne zusätzlichen Clip zu fixieren.

Der Erfindungsgedanke ist auf alle Bodensysteme und Wandsysteme anwendbar, bei denen ein Oberbelag auf einem Träger, bei welchem es sich insbesondere um eine Holzwerkstoffplatte, wie z.B. eine MDF- oder Spanplatte, handelt, angeordnet ist, wie beispielsweise Echtholzbeläge, Laminat, Träger mit lackierten Oberflächen als Oberbelag, Linoleum, Kork auf Trägerplatten etc. Bestehen die Elemente aus HDF- oder MDF-Material, ist eine Sollbruchkerbe zwar hilfreich, aber nicht unbedingt notwendig, da sich bei diesem Material ein klarer Faserbruch einstellt. Die Deckschicht kann insbesondere aus einem Dekorpapier mit Overlay bestehen, welches die Optik der Elemente bestimmt.

Bei einem Fußbodenbelag kann es sich somit um einen Parkettboden, einen Fertigparkettboden, einen Echtholzboden oder um einen Laminatfußboden handeln. Ebenso eignen sich Elemente aus massiven Materialien wie beispielsweise Holzdielen, Holzelemente, gegossene Formplatten aus Plastik, Kunststoffen, Formteilen oder Gipsplatten.

Der Erfindungsgedanke betrifft nicht nur das Verbinden von Elementen, sondern es ist, wie eingangs erwähnt, auch denkbar, ein Element als Rahmenbauteil für Rahmenböden oder Doppelböden auszuführen. Bei einer solchen Anwendung ist eines der zu verbindenden Elemente als Paneel und ein zweites Element als Rahmenbauteil konfiguriert. Das Paneel wird beim Zusammenbau in die aus einem oder mehreren Rahmenbauteilen bestehende Rahmenkonstruktion abgelegt und mit seinen Kopf- und/oder Längsseiten eingerastet.

Die Erfindung wird nachfolgend anhand von in den schematischen Zeichnungen dargestellten Ausführungsbeispielen zur Verbindung zweier Elemente in Form von Paneelen näher erläutert. Natürlich sind die gezeigten Verbindungen ohne Weiteres auf die Verbindung zwischen einem Rahmenbauteil, einer Rahmenkonstruktion und einem Paneel übertragbar. Es zeigen:
- Figuren 1 bis 3: jeweils einen Querschnitt durch den Verbindungsbereich zweier benachbarter Elemente in unterschiedlichen Montagestellungen, wobei Figur 1 die noch unverriegelte Position zeigt und die Figur 3 die Verriegelungsposition darstellt;
- Figur 4: einen Querschnitt durch den Verbindungsbereich zweier benachbarter Elemente in einer weiteren Ausführungsform;
- Figur 5: einen Querschnitt durch den Verbindungsbereich zweier benachbarter Elemente in einer weiteren Ausführungsform und
- Figuren 6 bis 8: jeweils einen Querschnitt durch den Verbindungsbereich zweier benachbarter Elemente in unterschiedlichen Montagestellungen.

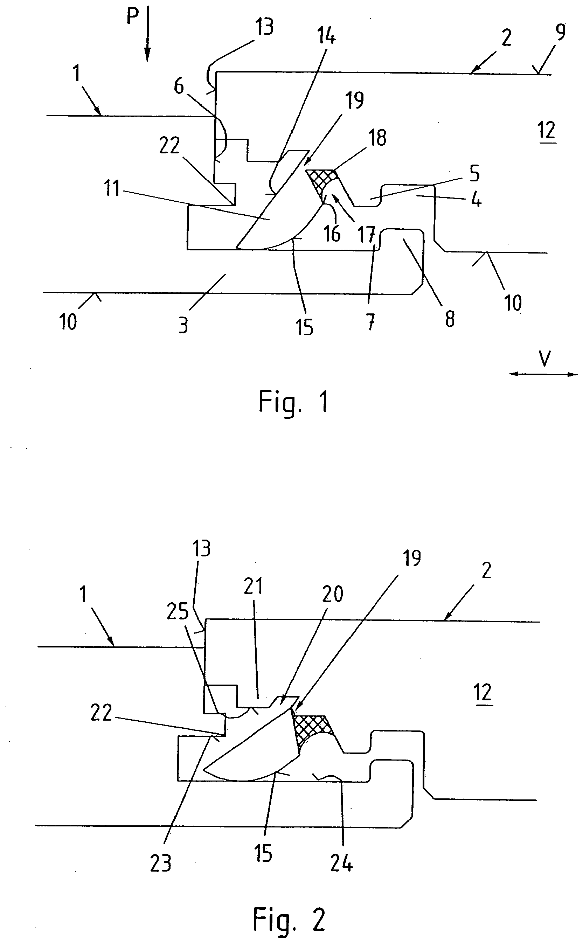

Figur 1 zeigt einen Querschnitt durch zwei Elemente 1, 2 in Form von Paneelen. Es kann sich hierbei um einen kopfseitigen Querschnitt der Elemente 1, 2 handeln. Die Elemente 1, 2 sind identisch konfiguriert, so dass die Elemente 1, 2 zu einem Fußbodenbelag zusammengesetzt werden können.

Figur 1 zeigt zwei benachbarte Elemente 1, 2 vor ihrer Verriegelung. Hierbei zeigt die Darstellung in der Bildebene links ein erstes Element 1 und in der Bildebene rechts ein zweites Element 2, welches dafür vorgesehen ist, mit dem ersten Element 1 verbunden zu werden. Das erste Element 1 weist eine Verriegelungsleiste 3 auf und das zweite Element 2 einen nach unten offenen Kuppelkanal 4 sowie einen sich hieran anschließenden, nach unten gerichteten endseitigen Kuppelwulst 5. Die Verriegelungsleiste 3 des ersten Elements 1 steht gegenüber einer Kopfseite 6 hervor. Das Element 2 wird so gegenüber dem Element 1 angeordnet, dass beim Absenken in Pfeilrichtung P der Kuppelwulst 5 des zweiten Paneels in einen Kuppelkanal 7 der Verriegelungsleiste 3 und der Kuppelkanal 4 des zweiten Elements 2 mit dem Kuppelwulst 8 der Verriegelungsleiste 3 des ersten Elements 1 in Eingriff gelangt. Dieser Bereich der Elemente 1, 2 dient im Wesentlichen zur Lageorientierung in horizontaler Ebene, wobei horizontal im Kontext der Erfindung der Verlegeebene V entspricht, die mit den zueinander parallelen Oberseiten 9 und Unterseiten 10 der Elemente 1, 2 zusammenfällt.

Wesentlicher Bestandteil der erfindungsgemäßen Profilierung ist ein Federelement 11. Das Federelement 11 ist eine in dieser Darstellung schräg nach unten gerichtete Zunge. Schräg bedeutet in diesem Fall ausgehend von einem Verbindungsbereich des Federelements 11 mit einem Kern 12 des Elements 2 zu einer Kopfseite 13 des zweiten Elements 2 und einer Unterseite 10 des zweiten Elements 2 verlaufend.

Die Schrägstellung oder Neigung gegenüber der Verlegeebene V beträgt bei diesem Ausführungsbeispiel 53°. Sie liegt vorzugsweise zwischen 40° und 70°, insbesondere zwischen 50° und 60°. Im hier dargestellten Ausführungsbeispiel ist eine Oberseite 14 des Federelements 11 als ebene Fläche ausgestaltet. Eine Unterseite 15 des Federelements 11 weist eine konvexe Wölbung auf. An einer zum Kern 12 des Elements 2 weisenden Rückseite 16 des Federelements 11 schließt sich ein zur Unterseite 10 des Elements 2 geöffneter Freiraum 17 an. In diesem Freiraum 17 ist ein elastischer Werkstoff 18 angeordnet, welcher das Federelement 11 mit dem Kern 12 elastisch verbindet. Das Federelement 11 ist einstückiger Bestandteil des Elements 2, wobei ein Übergangsbereich vom Kern 12 des Elements 2 zum Federelement 11 als Sollbruchstelle 19 konfiguriert ist. Oberhalb der Sollbruchstelle 19 ist ein Freischnitt 20 angeordnet. Der Freischnitt 20 wird in Richtung zur Kopfseite 13 des Elements 2 durch eine zur Unterseite 10 des Elements 2 weisende Anlageleiste 21 begrenzt (Figur 2). Der Freischnitt 20 oberhalb der Sollbruchstelle 19 ist in einem Schritt mit dem Ausschneiden der Oberseite 14 des Federelements 11 herstellbar. Vorteilhafterweise kann der Freischnitt 20 beim Versagen und insbesondere beim Bruch der Sollbruchstelle 19 frei werdendes Material aufnehmen.

Das Element 1 weist an seiner Kopfseite 6 eine parallel zur Verlegeebene V gegenüber der Kopfseite 6 hervorstehende Verriegelungskante 22 auf. Dabei verläuft eine sich an die Verriegelungskante 22 anschließende Unterseite 23 in dem hier dargestellten Ausführungsbeispiel parallel zu einer Stützfläche 24 der Verriegelungsleiste 3.

In der in Figur 1 dargestellten Ausgangsposition sind die Elemente 1, 2 mit ihren Kopfseiten 6, 13 zueinander ausgerichtet. Das Federelement 11 liegt mit einem ersten Bereich seiner konvexen Unterseite 15 auf der Stützfläche 24 der Verriegelungsleiste 3 auf. Es ist zu erkennen, dass das Federelement 11 ohne zu klemmen an der vorstehenden Verriegelungskante 22 vorbeigeführt werden kann.

Figur 2 stellt das Absenken des Elements 2 gegenüber dem Element 1 in Richtung des Pfeils P dar. Hierbei gleitet das Federelement 11 mit seiner Unterseite 15 entlang der Stützfläche 24 und bleibt bedingt durch die konvexe Wölbung während des Fügevorgangs mit der Stützfläche 24 in Kontakt. Gleichzeitig wird der elastische Werkstoff 18 im rückseitigen Freiraum 17 des Federelements 11 verformt. Das Federelement 11 wird in Richtung des benachbarten Elements 1 verschwenkt.

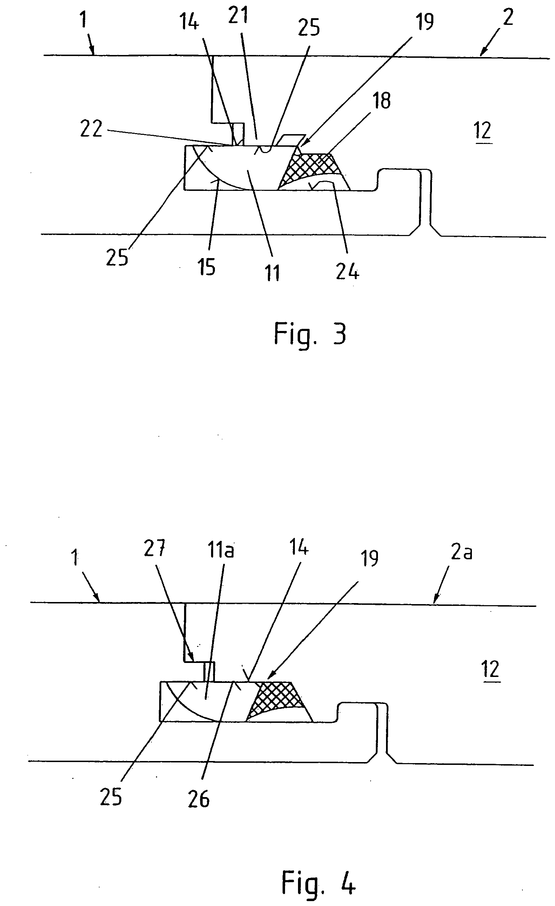

Figur 3 zeigt den verriegelten Zustand der Elemente 1, 2. Hierbei liegt das Federelement 11 mit seiner Oberseite 14 an einer Unterseite 23 neben der Verriegelungskante 22 des Elements 1 an.

Das Federelement 11 ist durch den Bruch der Sollbruchstelle 19 vom Kern 12 des Elements 2 getrennt. Hier handelt es sich um einen Sprödbruch. Die Sollbruchstelle 19 ist so konfiguriert, dass der Bruch beim Übergang von der in Figur 2 dargestellten Position zu der in Figur 3 dargestellten Position erfolgt. Das Federelement 11 ist in der Verriegelungsposition nur noch über den elastischen Werkstoff 18 mit dem Kern 12 des Elements 2 verbunden. Der der Sollbruchstelle 19 benachbarte Freistich 20 dient zur Aufnahme eventuell beim Bruch zwischen Kern 12 und Federelement 11 frei werdender Bruchstücke.

Eine nach unten weisende Anlagefläche 25 der Anlageleiste 21 liegt in der Verriegelungsposition an einer horizontal ausgerichteten Oberseite 14 des Federelements 11 an, wodurch eine zusätzliche vertikale Abstützung der Elemente 1, 2 erzielt wird. Darüber hinaus ist in der Verriegelungsposition der Kuppelwulst 5 nahezu vollständig hinter dem Kuppelwulst 8 der Verriegelungsleiste 3 angeordnet, so dass auch eine sichere Arretierung in horizontaler Ebene gewährleistet ist.

Figur 4 zeigt einen Querschnitt durch einen Verbindungsbereich zweier benachbarter Elemente 1, 2a in einer alternativen Ausgestaltung des zweiten Elements 2a. Hierbei ist oberhalb des Elements 11a und der Sollbruchstelle 19 kein Freischnitt vorgesehen, so dass in der dargestellten Verriegelungsposition das Federelement 11a mit seiner Oberseite 14 großflächiger als beim ersten Ausführungsbeispiel an einer nach unten weisenden, sich direkt an die Sollbruchstelle 19 anschließenden Anlagefläche 26 anliegt. Ein weiteres Absenken des zweiten Elements 2a ist nicht möglich, da sich das zweite Element 2a zusätzlich an einer Konsole 27 des ersten Elements 1 abstützt.

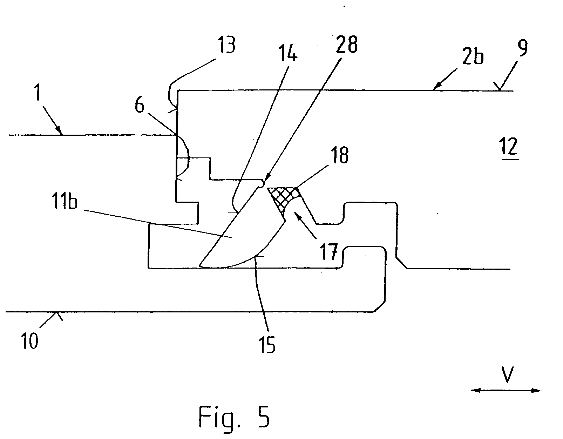

Figur 5 zeigt einen Querschnitt durch einen Verbindungsbereich zweier benachbarter Elemente 1, 2b vor ihrer Verriegelung. In dieser Ausführungsform ist an der Oberseite 14 des Federelements 11 b im Bereich der Sollbruchstelle 19 eine Sollbruchkerbe 28 vorgesehen. Diese Sollbruchkerbe 28 dient der gezielten Schwächung der Struktur und führt beim Verbinden der Elemente 1, 2b zu einem Bruch zwischen Kern 12 und Federelement 11 b. Darüber hinaus kann die Sollbruchkerbe 28 beim Bruch frei werdendes Material aufnehmen.

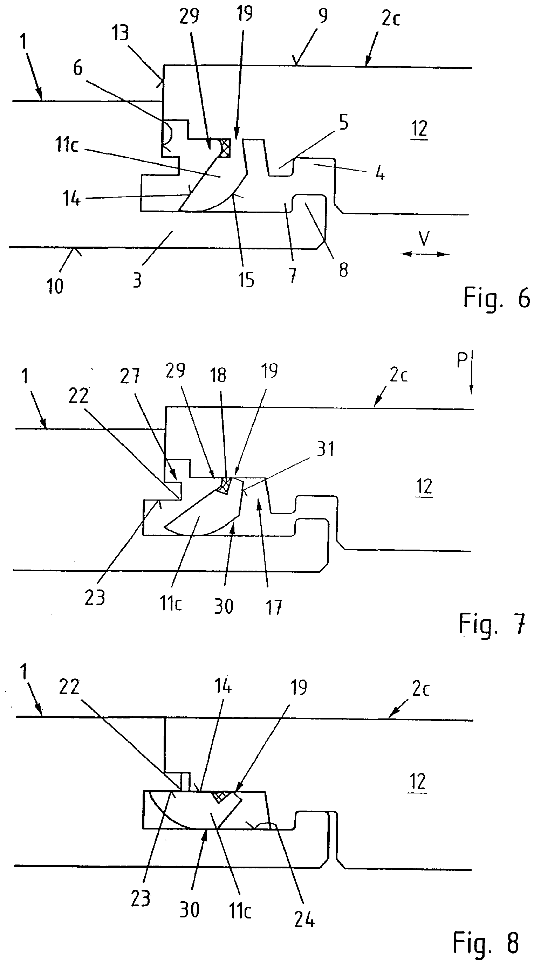

Die in den Figuren 6 bis 8 dargestellten Montagestellungen zweier benachbarter Elemente sowie die verwendeten Bezugszeichen entsprechen im Wesentlichen den Darstellungen der Figuren 1 bis 3. Allerdings unterscheidet sich das Federelement 11 c am Kern des Elements 2c von den in den Figuren 1 bis 5 dargestellten Federelementen dadurch, dass ein elastischer Werkstoff 18 in eine Fuge 29 an der Kopfseite 13 des Elements 2 angeordnet ist und nicht in einem rückseitigen Freiraum 17 des Federelements 11 c.

Zum Verbinden der benachbarten Elemente 1, 2c wird das Element 2c so gegenüber dem Element 1 angeordnet, dass beim Absenken in Pfeilrichtung P analog zu Figur 1, der Kuppelwulst 5 des zweiten Elements 2c an einen Kuppelkanal 7 der Verriegelungsleiste 3 und der Kuppelkanal 4 des zweiten Elements 2c mit dem Kuppelwulst 8 der Verriegelungsleiste 3 des ersten Elements 1 in Eingriff gelangt. Dies dient auch hier im Wesentlichen zur Lageorientierung in horizontaler Verlegeebene V.

Die analog zu den vorangehenden Darstellungen schräg nach unten gerichtete Zunge des Federelements 11 c verläuft ebenfalls von einem Verbindungsbereich des Federelements 11c mit einem Kern 12 des Elements 2c zu einer Kopfseite 13 und einer Unterseite 10 des zweiten Elements 2c. Eine Unterseite 15 des Federelements 11 c weist auch hier eine konvexe Wölbung auf, an welche sich ein eben ausgestalteter Bereich 30 anschließt. An diesen ebenen Bereich 30 schließt sich eine im Wesentlichen eben ausgestaltete Rückseite 31 des Federelements 11c an. Zwischen der Rückseite 31 und dem Kern 12 des Elements 2c ist der Freiraum 17 angeordnet. Das Federelement 11 c ist einstückiger Bestandteil des Elements 2c, wobei ein Übergangsbereich vom Kern 12 des Elements 2c zum Federelement 11 c als Sollbruchstelle 19 ausgeführt ist.

Mit einem im Wesentlichen parallel zur Verlegeebene V verlaufenden Freischnitt wird im Verbindungsbereich zwischen Federelement 11c und dem Kern 12 des Elements 2c eine Fuge 29 erzeugt, in welcher ein elastischer Werkstoff 18 angeordnet ist. In der dargestellten Ausgangsposition in Figur 6 liegt das Federelement 11 c mit einem ersten Bereich seiner konvexen Unterseite 15 auf der Stützfläche 24 der Verriegelungsleiste 3 auf und kann ohne zu klemmen an der vorstehenden Verriegelungskante 22 vorbeigeführt werden.

Figur 7 zeigt das Absenken des Elements 2c gegenüber dem Element 1 in Richtung des Pfeils P. Dabei gleitet das Federelement 11c mit seiner Unterseite 15 entlang der Stützfläche 24 und bleibt bedingt durch die konvexe Wölbung während des Fügevorgangs mit der Stützfläche 24, wie in Figur 2 ebenfalls dargestellt, in Kontakt. Gleichzeitig wird der elastische Werkstoff 18 in der stirnseitigen Fuge 29 des Federelements 11 c gestaucht bzw. gequetscht. Das Federelement 11 c wird in Richtung des benachbarten Elements 1 verschwenkt und das Material im Bereich der Sollbruchstelle 19 bis zur Bruchgrenze und beim weiteren Absenken darüber hinaus gedehnt.

Figur 8 zeigt den verriegelten Zustand der Elemente 1, 2c. Hierbei liegt das Federelement 11c mit seiner Oberseite 14 an einer Unterseite 23 neben der Verriegelungskante 22 des Elements 1 an.

Das Federelement 11c ist durch den Bruch der Sollbruchstelle 19 vom Kern 12 des Elements 2c getrennt. Der ebene Bereich 30 der Unterseite 15 des Federelements 11 c ist in der Verriegelungsposition parallel zu einer Stützfläche 24 des Elements 1 ausgerichtet. Die Oberseite 14 des Federelements 11 c ist parallel zur Unterseite 23 der Verriegelungskante 22 ausgerichtet und liegt an dieser an. Durch die Quetschung des elastischen Werkstoffs 18 in der Verriegelungsposition wirken die elastischen Rückstellkräfte auf den Kern 12 des Elements 2c und das Federelement 11c im Wesentlichen in Richtung der Verlegeebene V. Dadurch wird das Federelement 11c zusätzlich durch den Druck der Rückstellkräfte in seiner Verriegelungsposition gehalten.

### Bezugszeichen:

- 1 -: Element
- 2 -: Element
- 2a -: Element
- 2b -: Element
- 2c -: Element
- 3 -: Verriegelungsleiste
- 4 -: Kuppelkanal
- 5 -: Kuppelwulst
- 6 -: Kopfseite
- 7 -: Kuppelkanal
- 8 -: Kuppelwulst
- 9 -: Oberseite
- 10 -: Unterseite
- 11 -: Federelement
- 11a -: Federelement
- 11b -: Federelement
- 11c -: Federelement
- 12 -: Kern
- 13 -: Kopfseite
- 14 -: Oberseite
- 15 -: Unterseite
- 16 -: Rückseite
- 17 -: Freiraum
- 18 -: Werkstoff
- 19 -: Sollbruchstelle
- 20 -: Freischnitt
- 21 -: Anlageleiste
- 22 -: Verriegelungskante
- 23 -: Unterseite
- 24 -: Stützfläche
- 25 -: Anlagefläche
- 26 -: Anlagefläche
- 27 -: Konsole
- 28 -: Sollbruchkerbe
- 29 -: Fuge
- 30 -: Bereich
- 31 -: Rückseite

- P -: Pfeil
- V -: Verlegeebene

## Patentansprüche

1. Belag aus mechanisch miteinander verbindbaren Elementen, wobei mindestens eines der Elemente (1, 2, 2a, 2b, 2c) ein Paneel ist, wobei die Elemente (1, 2, 2a, 2b, 2c) an ihren gegenüberliegenden Seiten eine korrespondierende Profilierung aufweisen und über diese Profilierung miteinander verriegelbar sind, wobei die Verriegelung durch wenigstens ein Federelement (11, 11a, 11b, 11c) bewirkt wird, welches an einem der Elemente (2, 2a, 2b, 2c) angelenkt ist und welches bei der Fügebewegung hinter eine sich im Wesentlichen in horizontale Richtung erstreckende Verriegelungskante (22) des benachbarten Elements (1) verschwenkbar ist, wobei das Federelement (11, 11 a, 11 b, 11 b) zum einen bereichsweise über einen elastischen Werkstoff (18) mit einem Kern (12) des Elements (2, 2a, 2b, 2c) verbunden ist und zum anderen vor der Fügebewegung einstückiger Bestandteil des Elements (2, 2a, 2b, 2c) ist, **dadurch gekennzeichnet, dass** die einstückige Verbindung zwischen dem Federelement (11, 11 a, 11 b, 11 c) und dem Element (2, 2a, 2b, 2c) als Sollbruchstelle (19) konfiguriert ist, welche dafür vorgesehen ist, beim Verschwenken des Federelements (11, 11a, 11b, 11c) zu versagen, insbesondere zu brechen; dass mittels der Profilierung ihrer Seiten benachbarte Elemente (1, 2, 2a, 2b, 2c) durch eine im Wesentlichen vertikale oder schwenkbare Fügebewegung in horizontaler und vertikaler Richtung miteinander verriegelbar sind; dass beim Fügen der benachbarten Elemente (1, 2, 2a, 2b, 2c) das Federelement (11, 11 a, 11 b, 11c) mit seiner Unterseite auf einer der Verriegelungskante (22) gegenüberliegenden Stützfläche (24) gleitet.

2. Belag nach Anspruch 1, **dadurch gekennzeichnet, dass** die Verlagerung des Federelements (11, 11a, 11b, 11c) ausschließlich in Richtung des benachbarten Elements (1) erfolgt.

3. Belag nach Anspruch 1 oder 2, **dadurch gekennzeichnet, dass** eine Oberseite (14) des Federelements (11, 11a, 11b, 11c) vor der Fügebewegung von der Sollbruchstelle (19) schräg zu einer Unterseite (10) und einer Kopfseite (13) des Elements (2, 2a, 2b, 2c) weist.

4. Belag nach einem der Ansprüche 1 bis 3, **dadurch gekennzeichnet, dass** an einer Oberseite (14) des Federelements (11b) im Bereich der Sollbruchstelle (19) eine Sollbruchkerbe (28) angeordnet ist.

5. Belag nach einem der Ansprüche 1 bis 4, **dadurch gekennzeichnet, dass** das Element (2, 2a, 2b, 2c) eine Oberseite (9) aufweist, wobei das Federelement (11, 11 a, 11 b, 11 c) nur an seinem der Oberseite (9) benachbarten Ende über die Sollbruchstelle (19) mit dem Element (2, 2a, 2b, 2c) verbunden ist.

6. Belag nach einem der Ansprüche 1 bis 5, **dadurch gekennzeichnet, dass** zwischen einer Oberseite (9) des Elements (2) und der Sollbruchstelle (19) ein Freischnitt (20) angeordnet ist.

7. Belag nach einem der Ansprüche 1 bis 6, **dadurch gekennzeichnet, dass** die Unterseite (15) des Federelements (11, 11a, 11b, 11c) konvex ausgestaltet ist.

8. Belag nach einem der Ansprüche 1 bis 7, **dadurch gekennzeichnet, dass** eine im Wesentlichen ebene Oberseite (14) des Federelements (11, 11a, 11b, 11c) an einer Unterseite (23) der Verriegelungskante (22) in einer im Wesentlichen horizontalen Ausrichtung zur Anlage gelangt.

9. Belag nach einem der Ansprüche 1 bis 8, **dadurch gekennzeichnet, dass** der elastische Werkstoff (18) in einem Freiraum (17) angeordnet ist, welcher sich zwischen einem Kern (12) des Elements (2, 2a, 2b) und einer dem Kern (12) zugewandten Rückseite (16) des Federelements (11, 11a, 11 b) befindet.

10. Belag nach Anspruch 9, **dadurch gekennzeichnet, dass** der elastische Werkstoff (18) ein Klebstoff oder ein Reaktivklebstoff ist.

11. Belag nach einem der Ansprüche 1 bis 10, **dadurch gekennzeichnet, dass** an einer Seite eines Elements mehrere unabhängig voneinander verschwenkbare Federelemente angeordnet sind.

12. Belag nach einem der Ansprüche 1 bis 11, **dadurch gekennzeichnet, dass** benachbarte Federelemente durch ein elastisches Bauelement relativ zueinander beweglich miteinander verbunden sind.

13. Belag nach einem der Ansprüche 1 bis 12, **dadurch gekennzeichnet, dass** das die Verriegelungskante (22) aufweisende Element (1) eine unter das das Federelement (11, 11 a, 11 b, 11 c) tragende Element (2, 2a, 2b, 2c) greifende Verriegelungsleiste (3) aufweist, welche geeignet ist, benachbarte Elemente (1, 2, 2a, 2b, 2c) gegen Zugebelastungen in einer Verlegeebene (V) zu sichern.

14. Belag nach einem der Ansprüche 1 bis 13, **dadurch gekennzeichnet, dass** nach der Verriegelung zweier benachbarter Elemente (1, 2, 2a, 2b, 2c) die Oberseite (14) des Federelements (11, 11a, 11b, 11c) parallel zur Unterseite (23) der Verriegelungskante (22) und parallel zu einer Anlagefläche (25, 26) des das Federelement (11, 11a, 11 b, 11 c) tragenden Elements (2, 2a, 2b, 2c, 2d) ausgerichtet ist.

15. Belag nach einem der Ansprüche 1 bis 14, **dadurch gekennzeichnet, dass** nach der Verriegelung zweier benachbarter Elemente (1, 2c) die Unterseite (15) des Federelements (11c) einen zur Stützfläche (24) parallel ausgerichteten Bereich (30) aufweist.

16. Belag nach einem der Ansprüche 1 bis 15, **dadurch gekennzeichnet, dass** wenigstens ein Element als ein Rahmenbauteil für eine Rahmenkonstruktion ausgeführt ist.

## Claims

1. Covering comprising elements that can be connected to each other mechanically, wherein at least one of the elements (1, 2, 2a, 2b, 2c) is a panel, wherein the elements (1, 2, 2a, 2b, 2c) have a complementary profiling on their opposing sides and can be locked together via said profiling, wherein the locking is caused by at least one tongue element (11, 11a, 11b, 11c) which is connected to one of the elements (2, 2a, 2b, 2c) in an articulated manner and which can be pivoted during the joining motion behind a locking edge (22) of the adjacent element (1), said locking edge extending substantially in a horizontal direction, wherein the tongue element (11, 11a, 11b, 11b) is in part connected to a core (12) of the element (2, 2a, 2b, 2c) by means of an elastic material (18) and is a one-piece component of the element (2, 2a, 2b, 2c) before the joining motion, **characterised in that** the one-piece connection between the tongue element (11, 11a, 11b, 11c) and the element (2, 2a, 2b, 2c) is configured as a predetermined breaking point (19) which is provided to fail, in particular break, when the tongue element (11, 11a, 11b, 11c) is pivoted, **in that** by means of the profiling of the sides thereof adjacent elements (1, 2, 2a, 2b, 2c) can be locked together in a horizontal and vertical direction by a substantially vertical or pivoting joining motion and **in that** when joining the adjacent elements (1, 2, 2a, 2b, 2c), the tongue element (11, 11a, 11b, 11c) slides with the bottom side thereof on a support surface (24) opposing the locking edge (22).

2. Covering according to claim 1, **characterised in that** the displacement of the tongue element (11, 11a, 11b, 11c) occurs exclusively in the direction of the adjacent element (1).

3. Covering according to claim 1 or claim 2, **characterised in that** a top side (14) of the tongue element (11, 11a, 11b, 11c) before the joining motion points obliquely downwards from the predetermined breaking point (19) towards a bottom side (10) and a head side (13) of the element (2, 2a, 2b, 2c).

4. Covering according to any one of claims 1 to 3, **characterised in that** a predetermined breaking groove (28) is provided at a top side (14) of the tongue element (11b) in a region of the predetermined breaking point (19).

5. Covering according to any one of claims 1 to 4, **characterised in that** the element (2, 2a, 2b, 2c) has a top side (9), wherein the tongue element (11, 11a, 11b, 11c) is connected to the element (2, 2a, 2b, 2c) via the predetermined breaking point (19) only at the end of the tongue element adjacent to the top side (9).

6. Covering according to any one of claims 1 to 5, **characterised in that** a free cut (20) is arranged between a top side (9) of the element (2) and the predetermined breaking point (19).

7. Covering according to any one of claims 1 to 6, **characterised in that** the bottom side (15) of the tongue element (11, 11a, 11b, 11c) is configured as convex.

8. Covering according to any one of claims 1 to 7, **characterised in that** a substantially even top side (14) of the tongue element (11, 11a, 11b, 11c) abuts a bottom side (23) of the locking edge (22) in a substantially horizontal direction.

9. Covering according to any one of claims 1 to 8, **characterised in that** the elastic material (18) is arranged in a space (17) located between a core (12) of the element (2, 2a, 2b) and a rear side (16) of the tongue element (11, 11a, 11b) facing towards the core (12).

10. Covering according to claim 9, **characterised in that** the elastic material (18) is an adhesive or a reactive adhesive.

11. Covering according to any one of claims 1 to 10, **characterised in that** a plurality of tongue elements which are pivotable independent of one another are arranged on a side of one of the elements.

12. Covering according to any one of claims 1 to 11, **characterised in that** adjacent tongue elements are connected to one another by an elastic component for movement relative to one another.

13. Covering according to any one of claims 1 to 12, **characterised in that** the element (1) which has the locking edge (22) has a locking rail (3) which engages underneath the element (2, 2a, 2b, 2c) carrying the tongue element (11, 11a, 11b, 11c), said locking rail being suitable for securing adjacent elements (1, 2, 2a, 2b, 2c) against tensile loads in a plane of installation (V).

14. Covering according to any one of claims 1 to 13, **characterised in that** after two adjacent elements (1, 2, 2a, 2b, 2c) are locked, the top side (14) of the tongue element (11, 11a, 11b, 11c) is oriented parallel to the bottom side (23) of the locking edge (22) and parallel to an abutting surface (25, 26) of the element (2, 2a, 2b, 2c, 2d) carrying the tongue element (11, 11a, 11b, 11c).

15. Covering according to any one of claims 1 to 14, **characterised in that** after two adjacent elements (1, 2c) are locked, the bottom side (15) of the tongue element (11c) has a region (30) oriented parallel to the supporting surface (24).

16. Covering according to any one of claims 1 to 15, **characterised in that** at least one element is configured as a frame component for a frame structure.

## Revendications

1. Revêtement constitué d'éléments pouvant être reliés l'un à l'autre mécaniquement, dans lequel au moins un des éléments (1, 2, 2a, 2b, 2c) est un panneau, dans lequel les éléments (1, 2, 2a, 2b, 2c) présentent sur leurs côtés opposés un profilage correspondant et peuvent être verrouillés l'un à l'autre via ce profilage, dans lequel le verrouillage est effectué par au moins un élément de ressort (11, 11a, 11b, 11c) qui est articulé sur l'un des éléments (2, 2a, 2b, 2c) et qui peut pivoter lors du déplacement de la jonction derrière une arête de verrouillage (22) de l'élément adjacent (1) s'étendant sensiblement dans la direction horizontale, dans lequel l'élément de ressort (11, 11a, 11b, 11b) est relié d'une part par sections via un matériau élastique (18) avec un noyau (12) de l'élément (2, 2a, 2b, 2c) et fait partie intégrante de l'élément (2, 2a, 2b, 12c) avant le déplacement de la jonction, **caractérisé en ce que** la liaison d'un seul tenant entre l'élément de ressort (11, 11a, 11b, 11c) et l'élément (2, 2a, 2b, 2c) est configurée en point de rupture théorique (19), qui est prévu pour céder lors du pivotement de l'élément de ressort (11, 11a, 11b, 11c), en particulier pour se rompre ; **en ce que** les éléments (1, 2, 2a, 2b, 2c) adjacents par le profilage de leurs côtés peuvent se verrouiller l'un avec l'autre par un déplacement sensiblement vertical ou pivotant de la jonction dans la direction horizontale et la direction verticale ; **en ce que**, lors de la jonction des éléments adjacents (1, 2, 2a, 2b, 2c), l'élément de ressort (11, 11a, 11b, 11c) coulisse par son côté inférieur sur une surface d'appui (24) opposée à l'arête de verrouillage (22).

2. Revêtement selon la revendication 1, **caractérisé en ce que** le déplacement de l'élément de ressort (11, 11a, 11b, 11c) se fait exclusivement dans la direction de l'élément adjacent (1).

3. Revêtement selon la revendication 1 ou 2, **caractérisé en ce qu'**une face supérieure (14) de l'élément de ressort (11, 11a, 11b, 11c) se présente avant le déplacement de la jonction du point de rupture théorique (19) en oblique avec une face inférieure (10) et un côté de tête (13) de l'élément (2, 2a, 2b, 2c).

4. Revêtement selon l'une quelconque des revendications 1 à 3, **caractérisé en ce qu'**une entaille de rupture théorique (28) est ménagée sur une face supérieure (14) de l'élément de ressort (11b) dans la zone du point de rupture théorique (19).

5. Revêtement selon l'une quelconque des revendications 1 à 4, **caractérisé en ce que** l'élément (2, 2a, 2b, 2c) présente une face supérieure (9), dans lequel l'élément de ressort (11, 11a, 11b, 11c) est relié à l'élément (2, 2a, 2b, 2c) uniquement sur son extrémité adjacente de la face supérieure (9) via le point de rupture théorique (19).

6. Revêtement selon l'une quelconque des revendications 1 à 5, **caractérisé en ce qu'**est ménagée une découpe libre (20) entre une face supérieure (9) de l'élément (2) et le point de rupture théorique (19).

7. Revêtement selon l'une quelconque des revendications 1 à 6, **caractérisé en ce que** la face inférieure (15) de l'élément de ressort (11, 11a, 11b, 11c) se présente sous une forme convexe.

8. Revêtement selon l'une quelconque des revendications 1 à 7, **caractérisé en ce qu'**une face supérieure sensiblement plane (14) de l'élément de ressort (11, 11a, 11b, 11c) s'appuie sur une face inférieure (23) de l'arête de verrouillage (22) dans une orientation sensiblement horizontale.

9. Revêtement selon l'une quelconque des revendications 1 à 8, **caractérisé en ce que** le matériau élastique (18) est agencé dans un espace libre (17) qui se trouve entre un noyau (12) de l'élément (2, 2a, 2b) et une face arrière (16) de l'élément de ressort (11, 11a, 11b) tournée vers le noyau (12).

10. Revêtement selon la revendication 9, **caractérisé en ce que** le matériau élastique (18) est un adhésif ou un adhésif réactif.

11. Revêtement selon l'une quelconque des revendications 1 à 10, **caractérisé en ce que** plusieurs éléments de ressort pivotant indépendamment l'un de l'autre sont agencés sur un côté d'un élément.

12. Revêtement selon l'une quelconque des revendications 1 à 11, **caractérisé en ce que** des éléments de ressort adjacents sont reliés l'un à l'autre par un composant élastique de manière à pouvoir se déplacer l'un par rapport à l'autre.

13. Revêtement selon l'une quelconque des revendications 1 à 12, **caractérisé en ce que** l'élément (1) présentant l'arête de verrouillage (22) présente une éclisse de verrouillage (3) s'engageant en dessous de l'élément (2, 2a, 2b, 2c) portant l'élément de ressort (11, 11a, 11b, 11c), laquelle éclisse convient pour sécuriser des éléments adjacents (1, 2, 2a, 2b, 2c) à l'encontre de charges de traction dans un plan de déplacement (V).

14. Revêtement selon l'une quelconque des revendications 1 à 13, **caractérisé en ce que**, après le verrouillage de deux éléments adjacents (1, 2, 2a, 2b, 2c), la face supérieure (14) de l'élément de ressort (11, 11a, 11b, 11c) est orientée parallèlement à la face inférieure (23) de l'arête de verrouillage (22) et parallèlement à une surface d'appui (25, 26) de l'élément (2, 2a, 2b, 2c, 2d) portant l'élément de ressort (11, 11a, 11b, 11c).

15. Revêtement selon l'une quelconque des revendications 1 à 14, **caractérisé en ce que**, après le verrouillage de deux éléments adjacents (1, 2c), la face inférieure (15) de l'élément de ressort (11c) présente une zone (30) orientée parallèlement à la surface d'appui (24).

16. Revêtement selon l'une quelconque des revendications 1 à 15, **caractérisé en ce qu'**au moins un élément est conçu sous la forme d'un composant de châssis pour une structure de châssis.
